# EUROPÄISCHE PATENTSCHRIFT

(11) **EP 2 989 143 B1**
(45) Veröffentlichungstag und Bekanntmachung des Hinweises auf die Patenterteilung: **05.09.2018**
(21) Anmeldenummer: 14726535.9
(22) Anmeldetag: 23.04.2014
(51) Int. Cl.: C08G 63/80, C08G 63/85

(54) **VERFAHREN ZUR HERSTELLUNG VON POLY-L-MILCHSÄURE DURCH DIREKTE POLYKONDENSATION VON L-MILCHSÄURE**
METHOD FOR PRODUCING POLY-L-LACTIC ACID BY DIRECTLY POLYCONDENSATING L-LACTIC ACID
PROCÉDÉ DE PRODUCTION D'ACIDE POLY-L-LACTIQUE PAR POLYCONDENSATION DIRECTE D'ACIDE L-LACTIQUE

(30) Priorität: 24.04.2013 EP 13165159
(43) Veröffentlichungstag der Anmeldung: 02.03.2016
(73) Patentinhaber: Technische Universität Berlin, 10623 Berlin (DE)
(72) Erfinder: SCHOMÄCKER, Reinhard, 13589 Berlin (DE); REICHERT, Karl-Heinz, 14055 Berlin (DE); RAASE, Jennifer, 13585 Berlin (DE)
(74) Vertreter: Gulde & Partner
(86) Internationale Anmeldenummer: PCT/EP2014/058249
(87) Internationale Veröffentlichungsnummer: WO 2014/173958

(56) Entgegenhaltungen:
- EP-A1- 2 280 036
- WO-A1-2009/062223
- DATABASE WPI Week 201126 Thomson Scientific, London, GB; AN 2011-A92362 XP002729163, & CN 101 921 466 A (TORAY FIBERS RES INST CHINA CO LTD) 22. Dezember 2010 (2010-12-22)
- DATABASE WPI Week 201204 Thomson Scientific, London, GB; AN 2011-E66239 XP002729164, & BR PI0 904 706 A2 (UNIV FEDERAL GOIAS) 15. März 2011 (2011-03-15)

## Beschreibung

Die Erfindung betrifft ein Verfahren zur Herstellung von hochmolekularer Poly-L-Milchsäure durch direkte Polykondensation von L-Milchsäure mittels Schmelzphasenkondensation und anschließender Festphasenkondensation unter Verwendung saurer und geträgerter Feststoffkatalysatoren. Gegenstand der Erfindung ist auch die Verwendung eines sauren und geträgerten Feststoffkatalysators zur Herstellung von hochmolekularer Poly-L-Milchsäure durch direkte Polykondensation von L-Milchsäure, vorzugsweise von geträgertem und kalziniertem Zirkonsulfat.

Polymilchsäure, d. h. Kondensationspolymere basierend auf Milchsäure, sind aus vielen Gründen eine besonders attraktive Gruppe von Biopolymeren. Sie sind semikristalline Polymere (Kristallinität bis zu 40 %). Die Glasübergangstemperatur ist vom Wassergehalt abhängig und liegt bei ca. 50 bis 70°C. Die Schmelztemperatur liegt im Allgemeinen bei 170 bis 180°C. Ihr Hauptabbauprodukt, die Milchsäure, ist ein in der Natur gewöhnlich vorkommendes Produkt, ist nicht toxisch und wird in der Lebensmittel- und pharmazeutischen Industrie weitverbreitet verwendet. Für die Herstellung der Polymilchsäure sind prinzipiell zwei Synthesewege einsetzbar. Zum einen Polykondensation, wobei direkt aus Milchsäure ein Polymer erzeugt wird. Die direkte Polykondensation wird in der Regel in organischen Lösungsmitteln durchgeführt. Es werden infolge des Ring-Ketten-Gleichgewichts jedoch nur relativ niedermolekulare Produkte (Mn<10⁴ g/mol) erhalten. Technisch relevante Polyester benötigen jedoch Molmassen im Bereich von Mn= 10⁵ - 10⁶ g/mol.

Die Polymilchsäure wird deshalb bekanntermaßen vor allem durch Ringöffnungs-Polymerisation von Lactid, dem ringförmigen Zusammenschluss von zwei Milchsäuremolekülen, hergestellt. Bei Temperaturen zwischen 140 und 180 °C sowie der Einwirkung katalytisch wirkender Zinnverbindungen (z. B. Zinnoctoat) findet die Ringöffnungspolymerisation statt. So werden Kunststoffe mit einer hohen Molekülmasse und Festigkeit erzeugt. Lactid selbst lässt sich durch (Pre)Polykondensation und anschließende Depolymerisation aus Milchsäure gewinnen.

Polymilchsäure als ein biologisch abbaubares und biologisch verträgliches Polymer wird unter anderem als Verpackungsmaterial, Verkapselungsmaterial für Pharmaka und als resorbierbares chirurgisches Nahtmaterial eingesetzt.

Für solche Anwendungen und auch aus Gründen eines Schutzes der Umwelt, ist jedoch die Verwendung der zum Teil toxischen schwermetallischen Zinnverbindungen nicht wünschenswert, da diese auch als Verunreinigen im Produkt vorhanden sind, wodurch zusätzliche Reinigungsschritte notwendig werden.

Neben Zinnkatalysatoren sind auch andere mögliche Katalysatoren bekannt. So beschreibt z. B. EP 2 280 036A1 die direkte Herstellung von Polymilchsäure unter Verwendung von Sulfonsäuregruppen enthaltenden Verbindungen als saure Katalysatoren, wobei die Reaktion als Schmelzphasen- und anschließende Festphasenkondensation durchgeführt wird. Nachteilig ist, dass die sulfonsäuregruppenhaltigen Verbindungen in den Endprodukten erhalten bleiben.

Der Erfindung lag deshalb die Aufgabe zugrunde, Katalysatoren für die direkte Polykondensation von L-Milchsäure zu finden, die leicht aus dem Produkt entfernt werden können. Dabei soll der Katalysator hochaktiv und selektiv sein, und es soll eine katalysatorfreie und enantiomerenreine Poly-L-Milchsäure herstellbar sein, die zu mindestens 48%, vorzugsweise ca. 80%, kristallin ist, um Anwendungen zu genügen, bei denen eine hohe mechanische Festigkeit und Härte der Poly-L-Milchsäure erforderlich ist.

Die Aufgabe wird durch ein Verfahren gemäß Anspruch 1 gelöst.

Das erfindungsgemäße Verfahren zur Herstellung von Poly-L-Milchsäure durch direkte Polykondensation von L-Milchsäure ist dadurch gekennzeichnet, dass L-Milchsäure in Gegenwart eines sauren und geträgerten Feststoffkatalysators der Schmelzphasenkondensation unterworfen wird und der Katalysator vor der sich anschließenden Festphasenkondensation aus der Schmelze oder nach der Festphasenkondensation aus dem Endprodukt entfernt wird.

Überraschend führt die Verwendung des erfindungsgemäßen Feststoffkatalysators während der Schmelzphasenkondensation zu einer *semikristallinen* Polymilchsäure mit einer Kristallinität von 10 bis 50 %, vorzugsweise 10 bis 40 %, besonders bevorzugt 35 bis 50 % und einer Molmasse (Zahlenmittel) im Bereich von 5000 bis 20000 g/mol, vorzugsweise ca. 20000 g/mol. Die erhaltene Poly-L-Milchsäure weist mehr als 98 mol% L-Milchsäure-Einheiten auf. Der maximale Schmelzpunkt beträgt ca. 160°C. Durch Reinigung konnte die Kristallinität bis auf 60% erhöht werden.

Durch einen sich optional anschließenden Kristallisationsprozess und eine Festphasenkondensation wird hochmolekulare Poly-L-Milchsäure mit über 70% Kristallinität bereitgestellt.

Als Ausgangsmaterial wird L-Milchsäure eingesetzt, die kommerziell zur Verfügung steht. Die Milchsäure wird gewöhnlich als wässrige Lösung bereitgestellt, die 80-95 Gew% L-Milchsäure, 10 - 15 Gew% Wasser, geringe Mengen an D-Milchsäure (ca. 0,4 Gew %) und andere Verunreinigungen enthält.

Die Schmelzphasenkondensation erfolgt deshalb so, dass in einem ersten Schritt die Milchsäure entwässert und im zweiten Schritt über die Schmelztemperatur erhitzt wird. Die L-Milchsäure wird zur Entwässerung auf eine Temperatur von vorzugsweise 70 bis 150°C erwärmt. Das kann in Serien erfolgen und unter Einstellen verschiedener Drücke. Vorzugsweise erfolgt die Entwässerung im erfindungsgemäßen Verfahren bei 75-85 °C. Besonders bevorzugt liegt die Temperatur bei 80°C für ca. 30 Minuten und einem bevorzugten Druck von 50 mbar.

Die eigentliche Schmelzphasenkondensation wird bei einer Temperatur zwischen 150 bis 200°C durchgeführt und unter Abzug von freiwerdendem Wasser. Vorzugsweise erfolgt sie ebenfalls unter reduziertem Druck. Die Reaktionsdauer beträgt vorzugsweise zwischen 5-60 Stunden. In der Regel wird eine bevorzugte Temperatur von ca. 180°C gewählt. Der eingestellte Druck liegt bei 0.5 bis 50 mbar, vorzugsweise bei 15 mbar. Da das Reaktionsprodukt Wasser enthält, muss der Katalysator wassertolerant sein. Es kann so in Abhängigkeit vom Katalysator und der Katalysatorkonzentration (beispielsweise 0,3 Gew%) innerhalb von vorzugsweise 10 bis 30 Stunden eine Poly-L-Milchsäure mit einer Molmasse (Zahlenmittel) von bis zu 20000 g/mol erhalten werden.

Gemäß vorliegender Erfindung wird als Katalysator ein saurer Feststoffkatalysator eingesetzt, der an einen Träger gekoppelt ist. In einer Ausführungsvariante der Erfindung wird der Katalysator nach der Schmelzphasenkondensation und bei Erreichen eines Polymilchsäureproduktes mit einer bevorzugten Molmasse (Zahlenmittel) von 5000 bis 20000 g/mol aus der Produktschmelze entfernt. Dies geschieht vorzugsweise durch Abtrennen der Schmelze mittels Filtration. In einer anderen bevorzugten Ausführungsform kann dies durch Umfällen der Schmelzkondensate in einem Lösungsmittel erfolgen, z. B. in Chloroform mit Aceton/n-Heptan.

In einer weiteren Ausführungsvariante der Erfindung kann der Katalysator auch während der Festphasenkondensation im Reaktionsansatz verbleiben, wodurch in der gleichen Zeit eine höhere Molmasse erreicht wird. Er wird erfindungsgemäß dann aus dem Endprodukt entfernt, indem die erhaltene Poly-L-Milchsäure geschmolzen und die Schmelze mittels Filtration vom geträgerten Katalysator abgetrennt wird.

Es können nach der erfindungsgemäßen Schmelzphasenkondensation feste Poly-L-Milchsäurepartikel mit einem Durchmesser von vorzugsweise 100-250 µm erhalten werden. Der Schmelzpunkt beträgt vorzugsweise 160°C, die Kristallinität vorzugsweise 50-60% und die Molmasse M_{w} vorzugsweise 20000 g/mol.

Wie oben beschrieben kann in einer Ausführungsvariante der Erfindung vor der Festphasenkondensation gegebenenfalls ein Kristallisationsprozess, vorzugsweise bei 60 bis 120°C, besonders bevorzugt bei ca. 110°C, durchgeführt werden. Solche Kristallisationsverfahren sind dem Fachmann bekannt. Zum Beispiel kann das Produkt der Schmelzphasenkondensation in einer Gasphase bei Kristallisationstemperatur behandelt werden. Die Zeit ist nicht begrenzt, liegt aber vorzugsweise bei 30 min bis 1 Stunde. Es hat sich gezeigt, dass mit dem erfindungsgemäß bevorzugt verwendeten geträgerten und kalzinierten Zirkonsulfat auch ohne Kristallisationsschritt nach der Schmelzkondensation eine hohe Kristallinität der Poly-L-Milchsäure von 35 bis 50 % bzw. sogar von 50-60 % erreicht wird. Bei Durchführung des Kristallisationsprozesses können 70-75 % Kristallinität der Poly-L-Milchsäure erreicht werden.

Werden bei der Schmelzphasenkondensation feste Poly-L-Milchsäurepartikel mit den Eigenschaften wie oben beschrieben erhalten, so ist der nachfolgende Kristallisationsprozess nicht erforderlich. Diese Partikel können durch sich direkt anschließende Festphasenkondensation weiterbehandelt werden.

Die sich gemäß der Erfindung an die Schmelzphasenkondensation anschließende Festphasen-Nachkondensation wird bei Temperaturen zwischen Glasumwandlungs- und Schmelztemperatur (d. h. bei ca. 120-160°C) für mindestens 10 Stunden bis zum Entstehen einer hochmolekularen Poly-L-Milchsäure mit einer gewünschten Molmasse durchgeführt. Je nach gewünschter Molmasse erfolgt die Festphasenkondensation von 20 h bis zu 3 Tagen. In der Regel wird unter reduziertem Druck, vorzugsweise bei ca. 0,05-8 mbar, insbesondere bei 0,1-8 mbar, oder unter Stickstoffstrom gearbeitet.

In einer Ausführungsvariante der Erfindung werden die aus der Schmelzphasenkondensation und gegebenenfalls nachfolgenden Kristallisation hervorgegangenen Oligomere isotherm oder stufenweise erhitzt. Die Einstellung eines schrittweisen Temperaturregimes kann z. B. so vorgenommen werden, dass die Temperatur von 120°C auf 130°C, dann auf 140°C, dann auf 150°C und dann auf 160°C erhöht wird und in jeder Stufe z. B. mindestens 5 Stunden gehalten wird. Bei der isothermen Fahrweise wird eine besonders große Molmassenzunahme bis auf 80000 g/mol bei relativ hohen Temperaturen wie 120-140°C für mindestens 2 Tage, vorzugsweise 50-100 Stunden, besonders bevorzugt 60-70 Stunden, erhalten. Dies widerspricht den bislang bekannten Literaturergebnissen. In der Literatur liegt bei ähnlichen Startbedingungen (Molmasse, Kristallinität) das optimale Zeitfenster zwischen 20 und 40 Stunden, zu lange Reaktionszeiten wurden stets vermieden. Es zeigte sich jedoch erfindungsgemäß, dass bei Reaktionszeiten von 20 h kaum eine Molmassenzunahme zu beobachten war.

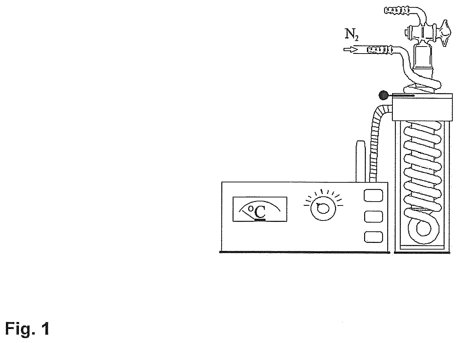

Ein für die Festphasenkondensation bevorzugt geeigneter tubularer Festbettreaktor ist in Figur 1 gezeigt. Wird mit Vakuum gearbeitet, wird die Dünnschichttechnik anstelle des Festbettes verwendet.

Als saurer und geträgerter Feststoffkatalysator wird erfindungsgemäß bevorzugt kalziniertes und geträgertes Zirkonsulfat (Zr(SO4)2) eingesetzt. Zirkonsulfat ist ein so genannter grüner Katalysator, da er eine geringe Toxizität hat. Darüber hinaus ist Zirkonsulfat bei der Schmelzphasenkondensation nicht löslich. Es hat sich gezeigt, dass das kalzinierte und geträgerte Zirkonsulfat ein besonders aktiver und selektiver Katalysator ist.

Als Trägermaterialien werden erfindungsgemäß mesoporöse Träger hoher spezifischer Oberflächen eingesetzt. Solche geeigneten Trägermaterialien sind beispielsweise SiO2, TiO2, Al2O3, ZrO2, Sb2O3,CaO, MgO und SnO, vorzugsweise SiO2.

Der geträgerte Katalysator wird z. B. durch Diffusionsimprägnierung oder Sprayimprägnierung hergestellt. Die Techniken sind dem Fachmann bekannt und beispielsweise im Handbook of Heterogeneous Catalysis 2nd Ed. Wiley-VCH, Weinheim 2008 von Gallei, E.F. et al. und US 7,097,880 B2 beschrieben. Bei der Herstellung des geträgerten Katalysators durch Sprayimprägnierung kann z. B. von einer Precursor-Lösung des sauren Feststoffkatalysators ausgegangen werden, welche auf den Träger gesprüht wird. Die Menge der Lösung entspricht dem bekannten Porenvolumen des Trägers bzw. liegt etwas darunter. Bei der Diffusionsimprägnierung wird der Träger mit Wasser getränkt, mit einer wässrigen Precursor-Lösung des sauren Feststoffkatalysators versetzt, gerührt und nach erfolgter Imprägnierung filtriert und mit wenig Wasser gewaschen.

Soll der erfindungsgemäß bevorzugte geträgerte Zirkonsulfat-Katalysator hergestellt werden, so wird also der Träger mit Zirkonsulfat-Tetrahydrat imprägniert und anschließend kalziniert. Bei der erfindungsgemäß bevorzugten Diffusionsimprägnierung wird der Träger, vorzugsweise Siliziumdioxid, mit Wasser getränkt, dann mit einer wässrigen Lösung von Zirkonsulfat-Tetrahydrat versetzt und nach intensivem Rühren, vorzugsweise für ca. 24 Stunden, filtriert, mit wenig dest. Wasser gewaschen und getrocknet. Die Sprayimprägnierung erfolgt durch Aufsprühen der Zirkonsulfat-Tetrahydrat-Lösung auf den trockenen Träger. Vor dem Einsatz der genannten Imprägnierungstechniken wurde der Träger, das SiO2, eine Stunde bei 500°C ausgeheizt, um Verunreinigungen aus den Poren zu entfernen. Der Beladungsgrad mit Zirkonsulfat-Tetrahydrat beträgt von 7-50 Gew%, vorzugsweise ca. 30 Gew%.

Dann wird das geträgerte Zirkonsulfat-Tetrahydrat bei 200 bis 600°C, vorzugsweise bei 250 bis 350°C, kalziniert. Die Kalzinierung wird für 1 bis 4 Stunden vorgenommen, bevorzugt für etwa 1 bis 3 Stunden. Überraschenderweise hat sich ein geträgerter Zirkonsulfat-Katalysator, der lediglich bei 250 bis 350°C kalziniert wurde, als besonders geeignet für das erfindungsgemäße Verfahren erwiesen. Als Träger wird besonders bevorzugt Siliziumdioxid verwendet. Die optimale Kalzinierungstemperatur um 300°C ist aus Literaturdaten nicht abzuleiten, da dort für den Einsatz von Veresterungen bei weitaus höheren Temperaturen um 600°C kalziniert wird. Eine Kalzinierung bei 600-800°C zeigte im Falle der Kondensation von Milchsäure keinen Einfluss auf die Aktivität.

Der geträgerte Zirkonsulfatkatalysator wird bei der Schmelzphasenkondensation vorzugsweise in einer Konzentration von 0,2-0,4 Gew%, besonders bevorzugt 0,3 Gew% eingesetzt (definiert in g wasserfreiem Zirkonsulfat pro g Milchsäure bezogen auf die 90 Gew% wässrige Lösung).

Mit dem erfindungsgemäßen Verfahren wird eine katalysatorfreie Poly-LMilchsäure mit einem hohen Molekulargewicht (Gewichtsmittel) von über 50.000 bis 100.000 g/mol, vorzugsweise 70.000 bis 100.000 g/mol, insbesondere 80.000 bis 100.000 g/mol, erhalten, welche im Wesentlichen keine Abbauprodukte enthält und eine hohe Kristallinität von ca. 60% bis über 80%, vorzugsweise ca. 70-75 % zeigt. Der Anteil der L-Milchsäure-Einheiten im Endprodukt liegt vorzugsweise bei 98-99,5 mol%.

Der erfindungsgemäße Katalysator katalysiert selektiv die Veresterung während der Schmelzphasenkondensation, führt zu einem sehr niedrigen Gehalt an D-Milchsäure und deshalb nach der Schmelzphasenkondensation zu einem semikristallinen Material. Nach einer 5-Stunden-Reaktion in der Schmelze (Zahlenmittel ca. 5000 g/mol) konnte kein D-Anteil mittels chiraler HPLC bestimmt werden. Selbst nach über 20 Stunden Reaktionszeit beträgt der D-Anteil nur 0.5 mol-%. Nach der Schmelzphasenkondensation konnte die Kristallinität auch in der erfindungsgemäßen Ausführungsvariante weiter gesteigert werden, in der der Katalysator schon entfernt wurde. Die Kristallinität ist ein Maß für die hohe Selektivität eines Katalysators. Mit dem erfindungsgemäßen Verfahren wird eine Kristallinität im Produkt erreicht, die sonst nur durch homogene Katalyse erzielt werden kann.

Der erfindungsgemäß hohe Kristallisierungsgrad von ca. 75 % zeigt, dass eine Racemisierung überraschenderweise nur in geringem Ausmaß stattgefunden hat.

Mit dem erfindungsgemäßen Verfahren kann also unter Verwendung eines sehr aktiven und selektiven Katalysators eine hochmolekulare Poly-L-Milchsäure bereitgestellt werden, die durch hohe Reinheit, Katalysatorfreiheit und hohe Kristallinität gekennzeichnet ist.

Fig. 1 zeigt die schematische Darstellung einer Apparatur für die Festphasen-Nachkondensation (BÜCHI GKR-50 mit tubularem Festbettreaktor).

Nachfolgend wird die Erfindung an einem Ausführungsbeispiel näher erläutert.

### Ausführungsbeispiel 1

### a) Herstellung eines an Siliziumdioxid gekoppelten kalzinierten Zirkonsulfatkatalysators durch Diffusionsimprägnierung

Zirkonsulfat wurde an Siliziumdioxid gemäß Juan, J. C. et al, Applied Catalysis A: General 2007, 332, 209-215 gekoppelt.

Zirkonsulfat-Tetrahydrat wird in destilliertem Wasser mittels eines U Itraschallbades Sonorex RK 52 H, Frequenz: 35 kHz für 3 Minuten gelöst. Siliziumdioxid mit einem Porenvolumen von 2,65 mL/g wird in destilliertem Wasser dispergiert und anschließend mit der wässrigen Zirkonsulfatlösung gemischt und über Nacht konstant gerührt (24 h). Nach Imprägnierung erfolgt eine Vakuumfiltration.

Anschließend wird der Filterkuchen mit geringen Mengen an destilliertem Wasser gewaschen und an der Luft getrocknet. Die verwendeten Mengen zum Erreichen unterschiedlicher Beladungen können der folgenden Tabelle entnommen werden.

| Beladung Gew. % | 7 | 15 | 30 | 50 |
|---|---|---|---|---|
| Zirkonsulfat-Tetrahydrat (g) | 0,280 | 0,450 | 1,12 | 1,000 |
| SiO2 (g) | 2,233 | 2,233 | 2,233 | 0,900 |
| Destilliertes Wasser für das Lösen des Hydrates (g) | 1,1 | 1,0 | 2,4 | 1,2 |
| Destilliertes Wasser zum Dispergieren des SiO2 (g) | 7,0 | 7,0 | 8,0 | 3,6 |

Das geträgerte Zirkonsulfat-Tetrahydrat mit einer Beladung von 30 Gew% wird anschließend bei 300°C für 1 Stunde kalziniert.

### b) Schmelzphasenkondensation

In ein 250 ml Gefäß, das mit einem Rotationsverdampfer verbunden ist, werden 45 g einer 90 Gew% wässrigen Lösung kommerziell verfügbarer L-Milchsäure gegeben. Die Temperatur wird mit einem externen Ölbad eingestellt. Der Reaktor ist weiterhin mit einer Pumpe und einem digitalen Druckkontrollgerät verbunden. Zwischen Reaktor und dem Druckkontrollgerät ist in die Druckleitung eine Flüssigstickstofffalle integriert. Die Entwässerung der L-Milchsäure erfolgt bei 80 °C unter einem Druck von 50 mbar für 30 Minuten. Nach Entwässerung wird ein unter a) hergestellter bei 300°C kalzinierter Katalysator zugegeben. Die Katalysatorkonzentration beträgt 0,3 Gew% definiert in g wasserfreies Zirkonsulfat pro g Milchsäure bezogen auf die 90 Gew% wässrige Lösung. Anschließend wird der Reaktor im Ölbad bei 180°C und bei einer Rotationsgeschwindigkeit von 100 U/Minute bewegt. Der Druck wird schrittweise auf 0,5 mbar innerhalb von 25 Minuten reduziert und dann für 5 Stunden bei 0,5 mbar und der Temperatur von 180°C konstant gehalten. Dann wird die entstandene Schmelze durch Filtration vom Katalysator abgetrennt. Die entstandene Polymilchsäure war nach Erkalten an der Luft zu ca. 35 % semikristallin, nach Lösen in Chloroform, Umfällung in Aceton/Heptan (1:2 Vol-%) und Trocknung bei 8 mbar, 30°C für 24 h zu 54 % semikristallin. Die Molmasse (Zahlenmittel) beträgt nach 5 h ca. 5000 g/mol. Der Umsatz liegt bei 97,6 %. Bei Verwendung von 0.7 Gew% Zirconiumsulfat konnten bereits nach 12 h Zahlenmittel von über 10000 g/mol erreicht werden. In Reaktoren mit einer besseren Druchmischung konnten bei gleichen zuvor genannten Bedingungen höhere Molmasse von mindestens 20000 g/mol erreicht werden (Rührkessel, Scheibenreaktor).

### c) Festphasenkondensation

Das Schmelzkondensat wird in Chloroform gelöst (1:5 Gew%) und in eine Lösung aus Acteon/Heptan (1:2 Vol-%) getropft. Nach einer Vakuumfiltration wurde der Feststoff 24 h bei 30°C und 8 mbar getrocknet. Das feine Pulver wurde gesiebt (< 250 m) und direkt für die Kristallisation und Festphasenkondensation eingesetzt. Die Kristallisation fand bei 70 bis 120°C und 8 mbar für 30 min bis 1 h statt.

Die Festphasenkondensation wurde in zwei verschiedenen Apparaturen durchgeführt, wobei kein Unterschied in der Molmasse zu verzeichnen war. Apparatur 1: BÜCHI GKR-50 mit Kugelrohr (waagerecht) und Vakuumanschluss (0.1 mbar)

Apparatur 2: Das beheizbare Rohr des BÜCHI GKR-50 steht senkrecht, darin steckt ein Glasrohr mit Porenglasfritte 2, auf der sich ca. 5 g Probe befinden (Festbett). Das Rohr wird von unten mit einem sehr geringen, trockenen, gasförmigen Stickstoffstrom durchspült. Damit der Stickstoff die gewünschte Temperatur erreicht, wird er durch eine Glasspirale um das große Hauptrohr geleitet. Eine zusätzliche Trocknung des Stickstoffs ergab keinen Unterschied bzgl. der Molmasse.

Das Temperaturprogramm wurde von 120 bis 160°C stufenweise in 5 bzw. 10 Stundenabständen für mindestens 20 h gefahren. Molmassen über 50000 g/mol resultierten. Auch die isotherme Fahrweise mit einer hohen Reaktionszeit ergab hohe Zahlenmittel von über 50000 g/mol. Vorzugsweise sollte die Reaktion bei hohen Temperaturen wie 140°C für mindestens 2 Tage, bevorzugt für 50 bis 100 Stunden durchgeführt werden.

In einer zweiten erfindungsgemäßen Ausführungsvariante wurde unter den obigen Bedingungen umgesetzt und der Katalysator nicht nach der Schmelzphasenkondensation entfernt, sondern erst aus dem Endprodukt, indem die erhaltene Poly-L-Milchsäure geschmolzen und die Schmelze filtriert wurde. Die erreichte Molmasse lag hier erwartungsgemäß höher.

## Patentansprüche

1. Verfahren zur Herstellung von Poly-L-Milchsäure durch direkte Polykondensation von L-Milchsäure mittels Schmelzphasen- und anschließender Festphasenkondensation, **dadurch gekennzeichnet, dass** L-Milchsäure in Gegenwart eines sauren und geträgerten Feststoffkatalysators der Schmelzphasenkondensation unterworfen wird und der Katalysator vor der sich anschließenden Festphasenkondensation aus der Schmelze oder nach der Festphasenkondensation aus dem Endprodukt entfernt wird.

2. Verfahren nach Anspruch 1, **dadurch gekennzeichnet, dass** als saurer Feststoffkatalysator kalziniertes Zirkonsulfat (Zr(SO₄)₂) eingesetzt wird, das an einen Träger gekoppelt ist.

3. Verfahren nach Anspruch 1 oder 2, **dadurch gekennzeichnet, dass** der Träger ein mesoporöses Material ist, vorzugsweise ausgewählt aus SiO₂, TiO₂, Al₂O₃, ZrO₂, Sb₂O₃, CaO, MgO oder SnO.

4. Verfahren nach einem der Ansprüche 1 bis 3, **dadurch gekennzeichnet, dass** der saure und geträgerte Feststoffkatalysator durch Imprägnierung eines Trägers mit Zirkonsulfat-Tetrahydrat und anschließendes Kalzinieren des geträgerten Zirkonsulfat-Tetrahydrats bei 200 bis 600°C, vorzugsweise bei 250 bis 350°C, hergestellt ist.

5. Verfahren nach einem der Ansprüche 1 bis 4, **dadurch gekennzeichnet, dass** als saurer und geträgerter Feststoffkatalysator kalziniertes Zirkonsulfat, das an SiO₂ als Träger gekoppelt ist, eingesetzt wird.

6. Verfahren nach einem der Ansprüche 1 bis 5, **dadurch gekennzeichnet, dass** die Schmelzphasenkondensation bei 150 bis 200°C und unter Abzug von freiwerdendem Wasser durchgeführt wird, vorzugsweise unter reduziertem Druck.

7. Verfahren nach einem der Ansprüche 1 bis 6, **dadurch gekennzeichnet, dass** der Katalysator vor der sich anschließenden Festphasenkondensation aus der Schmelze entfernt wird, indem die Schmelze mittels Filtration abgetrennt wird oder die Schmelzkondensate in einem Lösungsmittel umgefällt werden.

8. Verfahren nach einem der Ansprüche 1 bis 7, **dadurch gekennzeichnet, dass** vor der Festphasenkondensation ein Kristallisationsprozess bei 60 bis 120°C durchgeführt wird, vorzugsweise bei 70 bis 120°C, insbesondere bevorzugt bei ca. 110°C.

9. Verfahren nach einem der Ansprüche 1 bis 8, **dadurch gekennzeichnet, dass** die Festphasenkondensation zwischen Glasumwandlungs- und Schmelztemperatur für mindestens 20 Stunden durchgeführt wird.

10. Verfahren nach Anspruch 1, **dadurch gekennzeichnet, dass** der Katalysator aus dem Endprodukt entfernt wird, indem die erhaltene Poly-LMilchsäure geschmolzen und die Schmelze mittels Filtration abgetrennt wird.

11. Verwendung eines sauren und geträgerten Feststoffkatalysators zur Herstellung von hochmolekularer Poly-L-Milchsäure durch direkte Polykondensation von L-Milchsäure mittels Schmelzphasenkondensation und anschließende Festphasenkondensation.

## Claims

1. A method for producing poly-L-lactic acid through direct polycondensation of L-lactic acid by means of melting-phase and subsequent solid-phase condensation, **characterized in that** L-lactic acid is subject to melting-phase condensation in the presence of an acid and supported solid catalyst and or from the end product following the solid-phase condensation.

2. The method according to claim 1, **characterized in that** calcined zirconium sulphate (Zr(SO₄)₂) which is coupled to a carrier is used as the acid solid catalyst.

3. The method according to claim 1 or 2, **characterized in that** the carrier is a mesoporous material, preferably selected from SiO₂, TiO₂, Al₂O₃, ZrO₂, Sb₂O₃, CaO, MgO or SnO.

4. The method according to one of claims 1 to 3, **characterized in that** the acid and supported solid catalyst is produced by impregnation of a carrier with zirconium sulphate tetrahydrate and subsequent calcining of the supported zirconium sulphate tetrahydrate at 200 to 600°C, preferably at 250 to 350°C.

5. The method according to one of claims 1 to 4, **characterized in that** calcined zirconium sulphate which is coupled to SiO₂ is used as the acid and supported solid catalyst.

6. The method according to one of claims 1 to 5, **characterized in that** the melting phase condensation is carried out at 150 to 200°C with the removal of released water, preferably at reduced pressure.

7. The method according to one of claims 1 to 6, **characterized in that** the catalyst is removed from the melt before the subsequent solid-phase condensation by separating the melt by means of filtration or by precipitating the melt condensates in a solvent.

8. The method according to one of claims 1 to 7, **characterized in that** before the solid-phase condensation, a crystallization process is carried out at 60 to 120°C, preferably at 70 to 120°C, particularly preferably at about 110°C.

9. The method according to one of claims 1 to 8, **characterized in that** the solid-phase condensation is carried out between the glass transition and melting temperature for at least 20 hours.

10. The method according to claim 1, **characterized in that** the catalyst is removed from the end product by melting the poly-L-lactic acid obtained and separating the melt by means of filtration.

11. Use of an acidic and supported solid-phase catalyst to produce high-molecular poly-L-lactic acid by direct polycondensation of L-lactic acid by means of melting-phase condensation and subsequent solid-phase condensation.

## Revendications

1. Procédé, destiné à produire de l'acide poly-L-lactique par polycondensation directe d'acide L-lactique au moyen d'une condensation en phase fondue et d'une condensation en phase solide consécutive, **caractérisé en ce qu'**on soumet de l'acide L-lactique à la condensation en phase fondue en présence d'un catalyseur solide acide et supporté et avant la condensation en phase solide consécutive, on retire le catalyseur de la masse fondue ou après la condensation en phase solide, on le retire du produit final.

2. Procédé selon la revendication 1, **caractérisé en ce qu'**en tant que catalyseur solide acide, on met en oeuvre du sulfate de zirconium calciné (Zr(SO₄)₂), que l'on couple à un porteur.

3. Procédé selon la revendication 1 ou 2, **caractérisé en ce que** le porteur est une matière mésoporeuse, qui est choisie de préférence parmi le SiO₂, le TiO₂, l'Al₂O₃, le ZrO₂, le Sb₂O₃, le CaO, le MgO ou le SnO.

4. Procédé selon l'une quelconque des revendications 1 à 3, **caractérisé en ce que** le catalyseur solide acide et supporté est produit par imprégnation d'un porteur avec du sulfate de zirconium tétrahydraté et par calcination consécutive du sulfate de zirconium tétrahydraté supporté à de 200 à 600°C, de préférence à de 250 à 350°C.

5. Procédé selon l'une quelconque des revendications 1 à 4, **caractérisé en ce qu'**en tant que catalyseur solide acide et supporté, on met en oeuvre du sulfate de zirconium calciné, qui est couplé à du SiO₂ en tant que porteur.

6. Procédé selon l'une quelconque des revendications 1 à 5, **caractérisé en ce qu'**on réalise la condensation en phase fondue à de 150 à 200°C et en retirant de l'eau qui se libère, de préférence sous pression réduite.

7. Procédé selon l'une quelconque des revendications 1 à 6, **caractérisé en ce qu'**avant la condensation en phase solide consécutive, on retire le catalyseur de la masse fondue en séparant la masse fondue par filtration ou en précipitant les condensats de masse fondue dans un solvant.

8. Procédé selon l'une quelconque des revendications 1 à 7, **caractérisé en ce qu'**avant la condensation en phase solide, on réalise un procédé de cristallisation à de 60 à 120°C, de préférence à de 70 à 120°C, de manière particulièrement préférentielle, à env. 110°C.

9. Procédé selon l'une quelconque des revendications 1 à 8, **caractérisé en ce qu'**on réalise la condensation en phase solide entre la température de vitrification et la température de fusion, pendant au moins 20 heures.

10. Procédé selon la revendication 1, caractérisé en qu'on retire le catalyseur du produit final en faisant fondre l'acide poly-L-lactique obtenu et en séparant la masse fondue par filtrage.

11. Utilisation d'un catalyseur solide acide et supporté pour la production d'acide poly-L-lactique à poids moléculaire élevé par polycondensation directe d'acide L-lactique au moyen d'une condensation en phase fondue et d'une condensation en phase solide consécutive.
